# EUROPÄISCHE PATENTSCHRIFT

(11) **EP 0 541 577 B1**
(45) Veröffentlichungstag und Bekanntmachung des Hinweises auf die Patenterteilung: **07.09.1994**
(21) Anmeldenummer: 91912582.3
(22) Anmeldetag: 02.07.1991
(51) Int. Cl.: B60T 8/32, B60K 28/16

(54) **VERFAHREN ZUM ERHÖHEN DER FAHRSTABILITÄT EINES STRASSENFAHRZEUGS**
PROCESS FOR INCREASING THE DYNAMIC STABILITY OF A ROAD VEHICLE
PROCEDE POUR L'AMELIORATION DE LA TENUE DE ROUTE D'UN VEHICULE ROUTIER

(30) Priorität: 14.07.1990 DE 4022471
(43) Veröffentlichungstag der Anmeldung: 19.05.1993
(73) Patentinhaber: ITT Automotive Europe GmbH, 60488 Frankfurt (DE)
(72) Erfinder: RÖSCH, Klemens, D-6530 Bingen 14 (DE); KOLBE, Alexander, D-6112 Gross Zimmern (DE)
(86) Internationale Anmeldenummer: EP9101233
(87) Internationale Veröffentlichungsnummer: WO9201591

(56) Entgegenhaltungen:
- DE-A- 3 801 267
- ATZ AUTOMOBILTECHNISCHE ZEITSCHRIFT. Bd. 88, Nr. 5, Mai 1986, Stuttgart, DE, S. 273-284; H. Gauss, H.-J. Schöpf: "ASD, ASR und 4Matic: Drei Systeme im Konzept Aktive Sicherheit von Daimler-Benz - Teile 1."
- PATENT ABSTRACTS OF JAPAN vol. 13, no. 257 (M-837) (3605) 14. Juni 1989; & JP-A-160463

## Beschreibung

Die Erfindung bezieht sich auf ein verfahren und eine Schaltungsanordnung zum Erhöhen oder Erhalten der Fahrstabilität eines Straßenfahrzeugs durch Regelung des Antriebsschlupfes mit Hilfe eines Bremseneingriffsystems.

Es ist bereits bekannt, zur Verbesserung des Ahfahrverhaltens und des Vortriebs eines Straßenfahrzeuges Vorrichtungen in dem Fahrzeug zu installieren, die das Durchdrehen der Antriebsräder oder zu hohen Antriebsschlupf verhindern. Solche Durchdrehtendenzen treten auf, sobald das Antriebsmoment des Fahrzeugmotors größer wird als das über die Räder auf die Straße übertragbare Moment.

Mit steigendem Antriebsschlupf nimmt nicht nur das auf die Straße übertragbare Moment in Fahrtrichtung - nach Überschreiten eines Maximums - wieder ab, sondern die Seitenführungskraft der Räder sinkt auf einen relativ sehr geringen Wert. Bei Fahrzeugen mit Vorderradantrieb wird dadurch die Lenkbarkeit und das Fahrverhalten in der Kurve beeinträchtigt, während bei Fahrzeugen mit Hinterradantrieb bei zu geringer Seitenführungskraft sogar eine Schleudergefahr besteht.

Zur Regelung des Vortriebs bzw. des Azitriebsschlupfes ist es aus der DE 36 24 722 A1, die hier als Beispiel für zahlreiche Schriften über Systeme dieser Art zitiert ist, bekannt, das zum Durchdrehen neigende Antriebsrad durch Bremseneingriff zu stabilisieren. Mit Rücksicht auf die Temperatur bzw. Belastbarkeit der Bremse ist die Zeitdauer, in der das Überschußmoment der Antriebsachse durch die Bremse kompensiert werden darf, sehr begrenzt. Aus diesem Grund wird bei anderen bekannten Antriebsschlupfregelsystemen, z.B. bei den in der DE 38 09 101 A1 beschriebenen, der Bremseneingriff mit einem Motoreingriff kombiniert. Dies bedeutet allerdings einen erheblich höheren Aufwand.

Aus der DE 38 01 267 A1 ist auch bereits eine Fahrzeugbremsanlage bekannt, mit der zur Erhöhung der Fahrstabilität beim Bremsen auf einem Untergrund mit unterschiedlichem Reibbeiwert rechts/links der Bremsdruck an demjenigen Hinterrad, das auf dem griffigerem Untergrund läuft, reduziert wird, wenn der Bremsschlupf an diesem Rad eine bestimmte Größe überschreitet. Auf diese Weise soll die Seitenführungskraft, die dieses Rad aufbringen kann, erhöht und ein Ausbrechen des Fahrzeuges verhindert werden. Diese Bremsanlage soll anstelle einer blockiergeschützten Bremsanlage verwendet werden.

Der vorliegenden Erfindung liegt nun die Aufgabe zugrunde, ein Verfahren zur Regelung des Antriebsschlupfes zu entwickeln, das ausschließlich auf Bremseneingriff beruht und das dennoch nicht nur für eine kurze Zeitspanne - mit Rücksicht auf die Bremsenbelastung - in Funktion sein darf. Das Verfahren sollte zu einer Erhöhung des Fahrstabilität beitragen.

Es hat sich gezeigt, daß diese Aufgabe mit einem Verfahren der eingangs genannten Art gelöst werden kann, dessen Besonderheit darin besteht, daß das Drehverhalten dieses Rades (HM-Rad) überwacht und durch Bremseneingriff stabilisiert wird, sobald der Antriebsschlupf dieses Rades einen Grenzwert überschreitet, sowie daß nach dem Einsetzen des Bremseneingriffs an dem den höheren Reibbeiwert aufweisenden Rad (HM-Rad) eine Bremsdruckeinsteuerung in die Radbremse des zweiten Rades (LM-Rad) dieser Achse verhindert und ein in der Radbremse dieses zweiten Rades (LM-Rad) vorhandener Bremsdruck konstantgehalten oder abgebaut wird.

Während bisher durch die Antriebsschlupfregelung vor allem das entlastete, den geringeren Reibbeiwert aufweisende Rad der Antriebsachse durch Bremseneingriff stabilisiert wurde, beruht die Erfindung auf der Erkenntnis, daß es ausreichend und von Nutzen ist, in jeder Situation bzw. in jedem Fahrzustand dafür Sorge zu tragen, daß das auf dem hohen Reibbeiwert angetriebene Rad stabil bleibt. Antriebsschlupftendenzen an diesem HM-Rad werden durch Bremseneingriff abgefangen, so daß dieses Rad die Seitenführungskraft behält. Das Verhalten des entlasteten Rades (LM-Rades) ist in dieser Situation von untergeordneter Bedeutung; sobald das erfindungsgemäße Verfahren in Funktion tritt, wird ein weiterer Druckaufbau an diesem LM-Rad verhindert und evtl. vorhandener Bremsdruck abgebaut.

Wichtig ist die jederzeitige, korrekte Erkennung des die höhere Seitenführungskraft aufweisenden Rades. Eine vorteilhafte Ausführungsart des erfindungsgemäßen Verfahrens besteht darin, daß dieses Rad durch Auswerten von Meßwerten und Kriterien, die das Drehverhalten der angetriebenen Räder wiedergeben, z.B. durch die zeitliche Reihenfolge des Instabilwerdens der beiden Räder einer angetriebene Achse, durch Vergleich des (gefilterten) Antriebsschlupfes dieser beiden Räder oder auf ähnliche Weise, bestimmt wird. Wurde vor Einsetzen des erfindungsgemäßen Verfahrens auf herkömmliche Weise der Antriebsschlupf durch Bremseneinsteuerung in das geringer belastete Rad gesteuert (diese Art der Regelung wird hier zur Unterscheidung von dem erfindungsgemäßen Verfahren als "Vortriebsregelung" bezeichnet), ist das die größere Seitenführungskraft aufweisende Rad durch Vergleich des mittleren Bremsdruckniveaus in den Radbremsen der beiden angetriebenen Räder während dieser Vortriebsregelung erkennbar.

Eine vorteilhafte Schaltungsanordnung zur Durchführung des erfindungsgemäßen Verfahrens umfaßt Schaltkreise zum Erkennen des momentan den höheren Reibbeiwert aufweisenden Rades und Schaltkreise zum Überwachen dieses Rades sowie zur Steuerung des Bremsdruckes beim Instabilwerden dieses Rades und ist als Zusatz zu einer Schaltungsanordnung zur Vortriebsregelung durch Bremseneingriff, die bereits beim Instabilwerden eines angetriebenen Rades einsetzt, ausgebildet und tritt in Funktion, sobald die Fahrzeuggeschwindigkeit eine vorgegebene Geschwindigkeitsschwelle überschreitet oder sobald vorgegebene Kriterien, die eine übermäßige Belastung der Radbremsen oder anderer Fahrzeugkomponenten anzeigen, erfüllt sind; außerdem sind Mittel vorhanden, die nach dem Einsetzen des Bremseneingriffs an dem den höheren Reibbeiwert aufweisenden Rad (HM-Rad) eine Bremsdruckeinsteuerung in der Radbremse des zweiten Rades (LM-Rad) dieser Achse verhindern, wobei diese Mittel in diesem Falle in der Radbremse dieses zweiten Rades (LM-Rad) vorhandenen Bremsdruck konstanthalten oder abbauen. Die vorgenannte Geschwindigkeitsschwelle ist zweckmäßig auf einen Wert zwischen 20 und 50 km/h, z.B. auf 25 km/h festgelegt. Beim Einsetzen der von dem Drehverhalten des HM-Rades abhängigen Regelung, der sogen. "Stabilitätsregelung" (Stabilitätskontrolle "SK"), wird zweckmäßigerweise bei dieser Kombination von Vortriebs- und Stabilitätsregelung die Vortriebsregelung abgeschaltet.

Nach einer weiteren Ausführungsart der Erfindung tritt die von dem HM-Rad abhängige Regelung anstelle der Vortriebsregelung in Funktion, sobald die Bremsentemperatur oder ein durch Messung der die Bremstemperatur bestimmenden Vorgänge gewonnener Näherungswert für die Bremsentemperatur (Temperaturmodell) einen Grenzwert überschreitet.

Weitere Merkmale, Vorteile und Anwendungsmöglichkeiten der Erfindung gehen aus der folgenden Beschreibung eines Ausführungsbeispiels anhand der beigefügten Darstellungen hervor.

Es zeigen
- Fig. 1 - 3: in Diagrammen das Drehverhalten (v_{Rad}) der beiden Räder einer angetriebenen Achse, die Fahrzeugreferenzgeschwindigkeit (v_{Ref}) und den Bremsdruckverlauf (p) in verschiedenen, für die Anwendung des erfindungsgemäßen Verfahrens wichtigen Situationen und
- Fig. 4: im Ablaufdiagramm eine Ausführungsart der erfindungsgemäßen Schaltungsanordnung.

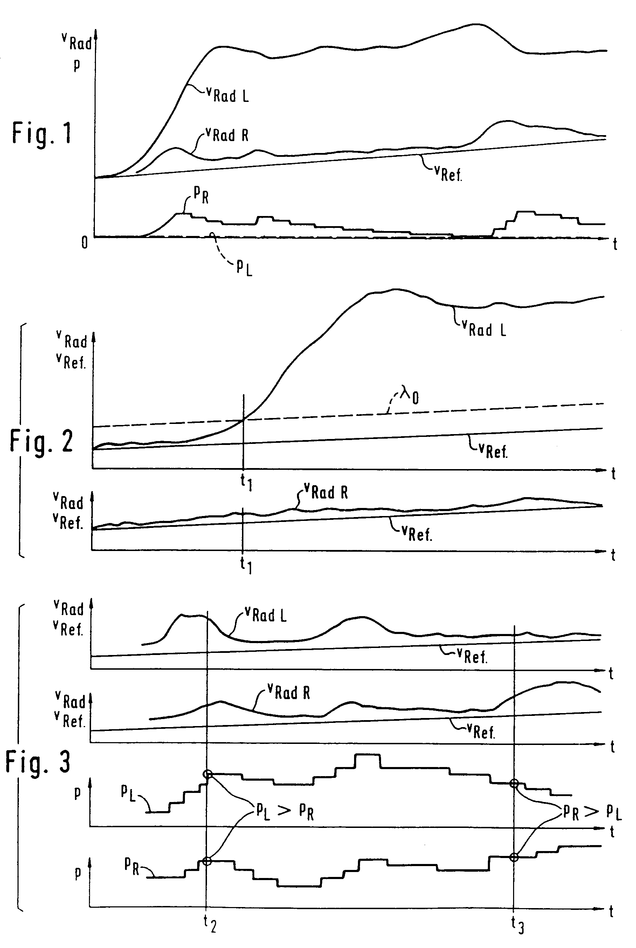

Die Diagramme in den Fig. 1 - 3 dienen zur Veranschaulichung der Regelunsvorgänge bei Anwendung des erfindungsgemäßen Verfahrens.

Der Grundgedanke der Erfindung besteht darin, daß die Fahrstabilität eines angetriebenen Fahrzeugs in jedem Fahrzustand allein durch Bremseneingriff gewährleistet werden kann, wenn die Regelung derart ausgelegt ist, daß zumindest das HM-Rad, d.h. das auf dem höheren Reibbeiwert laufende Rad bzw. der Antriebsschlupf dieses Rades in einem Bereich gehalten wird, in dem dieses Rad eine hohe Seitenführungskraft ausüben kann. Der Antriebsschlupf dieses HM-Rades muß also durch den Bremseneingriff auf einem geringen Wert gehalten werden. Das zweite Rad der angetriebenen Achse darf in dieser Situation hohen Antriebsschlupf aufweisen, ohne daß dadurch die Fahrstabilität gefährdet würde. Die Fahrstabilität bleibt auch dann erhalten, wenn das auf dem niedrigen Reibbeiwert laufende Rad hohen Antriebsschlupf zeigt oder durchdreht und folglich nur noch minimale Seitenführungskraft aufnehmen kann.

Fig. 1 zeigt das Drehverhalten der beiden angetriebenen Vorderräder und den Verlauf des eingesteuerten Bremsdruckes in einer solchen Situation. Die Fahrzeuggeschwindigkeit oder die Fahrzeugsreferenzgeschwindigkeit v_{Ref} steigt kontinuierlich an. Das linke Vorderrad ist hier das LM-Rad, weil es einen vergleichsweise geringen Reibbeiwert (Low Mü) aufweist. Aus dem dargestellten Geschwindigkeitsverlauf v_{RadL} ist erkennbar, daß dieses Rad zum Durchdrehen neigt bzw. hohen Antriebsschlupf aufweist und folglich nur noch geringe Seitenführungskraft ausüben kann. Das rechte Vorderrad, dessen Geschwindigkeit die Kurve v_{RadR} zeigt, ist in diesem Fall das HM-Rad. Antriebsschlupftendenzen des HM-Rades werden durch Einsteuerung von Bremsdruck p_{R} in die Radbremse dieses Rades abgefangen, so daß dieses Rad stabil bleibt, stets nur geringen Antriebsschlupf aufweist und folglich die gewünschte hohe Seitenführungskraft ausüben kann. Die Radbremse des linken, durchdrehenden Vorderrades bleibt drucklos (p_{L} ist praktisch Null); zu Beginn des dargestellten Vorgangs evtl. im linken Rad vorhandener Bremsdruck, der auf eine vorangegangene übliche vortriebsregelung zurückgehen könnte, würde bei Einsetzen der erfindungsgemäßen Regelung abgebaut werden.

Wichtig für die Durchführung des erfindungsgemäßen Verfahrens ist die zuverlässige Erkennung und Selektion des HM-Rades. Hierfür sind je nach Situation mehrere Kriterien geeignet. Fig. 2 bezieht sich auf eine Situation, in der durch Ermittlung des Antriebsschlupfes eine einwandfreie Erkennung des HM-Rades möglich ist. Zum Zeitpunkt t₁ übersteigt der Antriebbschlupf am linken Vorderrad eine Schlupfschwelle λO, während die Geschwindigkeit v_{RadR} des rechten Vorderrades über die gesamte dargestellte Zeitspanne nur geringförmig von der Fahrzeuggeschwindigkeit oder Fahrzeugreferenzgeschwindigkeit v_{Ref} abweicht. Das rechte Vorderrad ist folglich das HM-Rad, das erforderlichenfalls durch Bremsdruckeinsteuerung - in der dargestellten Zeitspanne ist dies nicht notwendig - zum Erhalt der Seitenführungskraft stabilisiert werden müßte.

Fig. 3 bezieht sich auf eine Situation, in der zunächst durch eine übliche Vortriebsregelung der Vortrieb bzw. das Anfahrverhalten eines Fahrzeugs verbessert wird. Im Rahmen dieser Vortriebsregelung wird durch Bremseneingriff das Laufverhalten der beiden Antriebsräder stabilisiert. Sobald ein zu hoher Antriebsschlupf auftritt, wird die Bremse aktiviert. Zu hoher Antriebsschlupf tritt natürlich zuerst an dem entlasteten oder dem geringeren Reibbeiwert aufweisenden Rad (LM-Rad) auf. Sodann kann auch das zweite Rad instabil werden, so daß auch dieses abgebremst werden muß. Der Bremseneingriff bei einer solchen Vortriebsregelung ist jedoch nur für eine kurze Zeitspanne zulässig, weil sonst die Bremse überhitzt würde. Durch Motoreingriff, d.h. Reduzieren des Antriebsmomentes, oder durch Abschalten der auf dem Bremseneingriff beruhenden Vortriebsregelung bei Erreichen der Bremsen-Belastungsgrenze muß die Bremsanlage geschützt werden. Im vorliegenden Fall wird anstelle der Abschaltung der Vortriebsregelung auf eine Arbeitsweise gemäß der Erfindung, auf eine sogen. Stabilitäs-Regelung (SK-Mode), umgeschaltet. Zur Erkennung des HM-Rades als Voraussetzung zur Umschaltung auf diese SK-Regelung wird bei einer laufenden Vortriebsregelung das mittlere Druckniveau der beiden Räder der angetriebenen Achse verglichen. Das Rad, das das niedrigste mittlere Druckniveau besitzt, wird als HM-Rad erkannt. Zum Zeitpunkt t₂ während des Regelvorganges nach Fig. 3 hätte das linke Vorderrad, wie die Druckverlaufskurven p_{L} und p_{R} zeigen, das höhere Druckniveau, zum Zeitpunkt t₃ wäre das Druckniveau p_{R} größer als das Druckniveau p_{L}.

Innerhalb einer laufenden Stabilitätsregelung gemäß der Erfindung ist es nicht möglich, anhand der Druckniveaus das HM-Rad zu identifizieren. In dieser Situation wird durch Vergleich des (gefilterten) Schlupfes der beiden Antriebsräder die Erkennung des HM-Rades durchgeführt. Das Rad, das den geringsten Antriebsschlupf besitzt, ist in diesem Fall das HM-Rad.

Das HM-Rad soll grundsätzlich stabil gehalten werden. Dies gilt gleichermaßen für den Bereich reiner Vortriebsregelung, bei der beim Auftreten eines instabilen Antriebsrades sofort Druck eingesteuert wird, als auch nach Umschaltung auf die erfindungsgemäße Stabilitätsregelung. Das HM-Rad wird, falls erforderlich, durch Bremseneingriff stabilisiert. Während der Stabilitätsregelung ist es nicht erforderlich, permanent Bremsdruck am HM-Rad aufzubauen, nämlich dann nicht, wenn
a) nach der Schlupferkennung am LM-Rad noch kein Schlupf am HM-Rad erkannt wird und wenn
b) sich das HM-Rad nach einem Bremseneingriff von selbst wieder stabil hält.

In den vorgenannten Fällen wird zwar das HM-Rad weiter überwacht, es ist aber keine Druckmodulation zur Aufrechterhaltung des stabilen Laufes dieses Rades notwendig.

Während der reinen Vortriebsregelung gelten sowohl für das HM-Rad als auch für das LM-Rad die gleichen Regelkriterien.

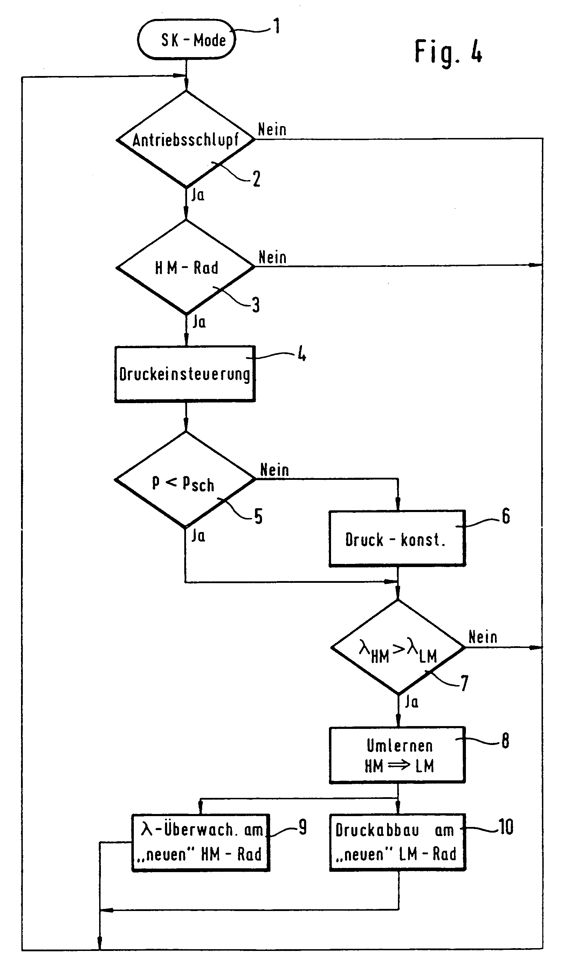

Fig. 4 zeigt in Form eines Ablaufdiagramms das Verhalten einer Schaltungsanordnung nach der Erfindung w#hrend einer bestimmten Situation. Es ist folgender Ablauf erkennbar:
Das Symbol 1 markiert den Start des hier erläuterten Programmablaufs (SK-Mode). Wird das Vorhandensein von Antriebsschlupf in der Verzweigung 2 bejaht und gilt dies für das HM-Rad (Verzweigung 3) wird in der Stufe 4 eine Bremsdruckeinsteuerung zur Stabilisierung des HM-Rades ausgelöst.

Außerdem wird festgestellt, was die Verzweigung 5 symbolisiert, ob der Bremsdruck p in der Radbremse des HM-Rades unter einem vorgegebenen Schwellwert p_{sch} liegt. Ist dies nicht der Fall, wird der Druck zunächst konstant gehalten (Stufe 6). In jedem Fall folgt ein Vergleich des Schlupfes beider angetriebenen Räder (Stufe 7). Der Antriebsschlupf des HM-Rades muß während der Initialisierung der Stabilitätsregelung (SK-Mode) aus den zuvor erläuterten physikalischen Gründen kleiner sein als der Schlupf des zweiten angetriebenen Rades, das ja auf niedrigerem Reibbeiwert läuft. Zeigt es sich (Verzweigung 7), daß der Schlupf des HM-Rades momentan größer ist als der Antriebsschlupf des zweiten Rades, liegt eine Fehlinterpretation vor. Die Regelung muß, symbolisiert durch die Stufe 8, umlernen. Das andere Rad ist in Wirklichkeit das HM-Rad. Folglich wird im Anschluß an den Vorgang 8 die Schlupfüberwachung 9 an das nun, d.h. nach dem Umlernen, als HM-Rad erkannte Antriebsrad angelegt. Gleichzeitig wird durch die Stufe 10 der Bremsdruckabbau an dem zweiten Antriebsrad, das nun als LM-Rad identifiziert wurde, in die Wege geleitet.

Dieser programmablauf wiederholt sich in jedem Loop.

Die Erfindung offenbart also ein Verfahren, mit dem auf einfache Weise, nämlich allein mit Hilfe der Bremse - unter Verzicht auf einen Motoreingriff - die Fahrstabilität eines Fahrzeugs während eines Traktionsvorgangs erhöht bzw. der Erhalt der Fahrstabilität sichergestellt wird. Als Ergänzung eines Vortriebs- oder Anfahrschlupfregelungssystems, das auf Bremseneingriff beruht, wird der Bereich, in dem eine solche Regelung eingesetzt werden kann, wesentlich erweitert. Das erforderliche Abschalten der herkömmlichen Systeme zum Vermeiden der Bremsenüberlastung und die damit verbundenen Nachteile werden folglich durch die Erfindung überwunden.

## Patentansprüche

1. Verfahren zum Erhöhen oder Erhalten der Fahrstabilität eines Straßenfahrzeugs durch Regelung des Antriebsschlupfes mit Hilfe eines Bremseneingriffssystems,
dadurch **gekennzeichnet**,
daß das momentan den höheren Reibbeiwert aufweisende Rad (HM-Rad) einer angetriebenen Achse ermittelt wird (3),
daß das Drehverhalten dieses Rades (HM-Rad) überwacht (2) und durch Bremseneingriff stabilisiert wird (4), sobald der Antriebsschlupf dieses Rades einen Grenzwert überschreitet, sowie
daß nach dem Einsetzen des Bremseneingriffs an dem den höheren Reibbeiwert aufweisenden Rad (HM-Rad) eine Bremsdruckeinsteuerung in die Radbremse des zweiten Rades dieser Achse verhindert und ein in der Radbremse dieses zweiten Rades (LM-Rad) vorhandener Bremsdruck konstantgehalten (6) oder abgebaut (10) wird.

2. Verfahren nach Anspruch 1, dadurch **gekennzeichnet**, daß das den höheren Reibbeiwert aufweisende Rad (HM-Rad) durch Auswerten von Meßwerten und Kriterien, die das Drehverhalten der angetriebenen Räder wiedergeben, z.B. durch die zeitliche Reihenfolge des Instabilwerdens der beiden Räder einer angetriebenen Achse, durch Vergleich des Antriebsschlupfes dieser beiden Räder oder dergl., bestimmt wird.

3. Schaltungsanordnung zur Durchführung des Verfahrens nach einem oder mehreren der Ansprüche 1 oder 2, mit Schaltkreisen zum Erkennen des momentan den höheren Reibbeiwert aufweisenden Rades (HM-Rad) sowie mit Schaltkreisen zum Überwachen dieses Rades (HM-Rad) und zur Steuerung des Bremsdruckes beim Instabilwerden dieses Rades, dadurch **gekennzeichnet**, daß diese als Zusatz zu einer Schaltungsanordnung zur Vortriebsregelung durch Bremseneingriff, die bereits beim Instabilwerden eines angetriebenen Rades einsetzt, ausgebildet ist und in Funktion tritt, sobald die Fahrzeuggeschwindigkeit eine vorgegebene Geschwindigkeitsschwelle überschreitet oder sobald vorgegebene Kriterien, die eine übermäßige Belastung der Radbremsen oder anderer Fahrzeugkomponenten anzeigen, erfüllt sind, und daß Mittel vorgesehen sind, die nach dem Einsetzen des Bremseingriffs an dem den höheren Reibbeiwert aufweisenden Rad (HM-Rad) eine Bremsdruckeinsteuerung in der Radbremse des zweiten Rades (LM-Rad) dieser Achse verhindern und daß diese Mittel in diesem Fall den in der Radbremse dieses zweiten Rades (LM-Rad) vorhandenen Bremsdruck konstanthalten oder abbauen.

4. Schaltungsanordnung nach Anspruch 3, dadurch **gekennzeichnet**, daß die Geschwindigkeitsschwelle auf einen Wert zwischen 20 und 50 km/h festgelegt ist.

5. Schaltungsanordnung nach Anspruch 3 oder 4, dadurch **gekennzeichnet**, daß das den höheren Reibbeiwert aufweisende Rad (HM-Rad) durch Vergleich des mittleren Bremsdruckniveaus in den Radbremsen der beiden Räder einer angetriebenen Achse während einer Vortriebsregelung ermittelt wird.

6. Schaltungsanordnung nach einem oder mehreren der Ansprüche 3 - 5, dadurch **gekennzeichnet**, daß beim Einsetzen der von dem Drehverhalten des den höheren Reibbeiwert aufweisenden Rades (HM-Rades) abhängigen Regelung (SK-Mode) die Vortriebsregelung abgeschaltet wird.

7. Schaltungsanordnung nach einem oder mehreren der Ansprüche 3 - 6, dadurch **gekennzeichnet**, daß die von dem Rad (HM-Rad), das den höheren Reibbeiwert aufweist, abhängige Regelung (SK-Mode) anstelle der Vortriebsregelung in Funktion tritt, sobald die Bremsentemperatur oder ein durch Messung der die Bremsentemperatur bestimmenden Vorgänge gewonnener Näherungswert (Temperaturmodell) einen Grenzwert überschreiten.

## Claims

1. A method to augment or preserve the driving stability of a road vehicle by controlling the traction slip by means of a brake management system,
**characterized** in that the wheel (HM-wheel) of a driven axle is identified (3) which instantaneously exhibits the higher coefficient of friction,
in that the rotational pattern of this wheel (HM-wheel) is monitored (2) and is stabilized by brake management (4) as soon as the traction slip of this wheel surpasses a limit value, and
in that, after the commencement of brake management at the wheel (HM-wheel) exhibiting the higher coefficient of friction, the introduction of braking pressure to the wheel brake of the second wheel (LM-wheel) of this axle is prevented, and a braking pressure prevailing in the wheel brake of this second wheel (LM-wheel) is kept constant (6) or is decreased (10).

2. A method as claimed in claim 1,
**characterized** in that the wheel which exhibits the higher coefficient of friction (HM-wheel) is identified by evaluation of test values and criteria indicative of the rotational pattern of the driven wheels, e.g. by the chronological order of the two wheels of a driven axle becoming unstable, by comparison of the traction slip of these two wheels, or in any similar fashion.

3. A circuit configuration for implementing this method as claimed in any one or more of the claims 1 to 2, composed of circuitries for identifying the wheel which instantaneously exhibits the higher coefficient of friction (HM-wheel), and circuitries for monitoring this wheel (HM-wheel) and for controlling the braking pressure when this wheel becomes unstable,
**characterized** in that this circuit configuration is provided as a supplement to a circuit configuration for traction slip control by brake management which becomes operative when a driven wheel becomes unstable and which starts to function as soon as the vehicle speed exceeds a predetermined speed threshold or as soon as predetermined criteria being indicative of an excessive load on the wheel brakes or on other vehicle components are fulfilled, and in that means are provided which, after the commencement of brake management on the wheel which exhibits the higher coefficient of friction (HM-wheel), prevent the introduction of braking pressure into the wheel brake of the second wheel of this axle (LM-wheel), and in that in this case these means keep constant or reduce the braking pressure prevailing in the wheel brake of this second wheel (LM-wheel).

4. A circuit configuration as claimed in claim 3,
**characterized** in that the speed threshold is set to a value between 20 and 50 km/h.

5. A circuit configuration as claimed in claim 3 or 4,
**characterized** in that the wheel which exhibits the higher coefficient of friction (HM-wheel) is identified by comparison of the mean braking pressure level in the wheel brakes of the two wheels of a driven axle during a traction slip control operation.

6. A circuit configuration as claimed in any one or more of claims 3 to 5,
**characterized** in that at the onset of the control (SK-mode) responsive to the rotational pattern of the wheel which exhibits the higher coefficient of friction (HM-wheel), the traction slip control is disconnected.

7. A circuit configuration as claimed in any one or more of claims 3 to 6,
**characterized** in that the control (SK-mode) responsive to the wheel which exhibits the higher coefficient of friction (HM-wheel), instead of the traction slip control, starts to function as soon as the brake temperature, or an approximation thereof, obtained by measuring the operations determining the brake temperature (temperature pattern) exceeds a limit value.

## Revendications

1. Procédé permettant d'accroître ou d'obtenir la stabilité de marche d'un véhicule routier par régulation du glissement de traction au moyen d'un système d'intervention des freins, caractérisé en ce que la roue (roue-MPE) d'un essieu moteur qui possède momentanément le coefficient de frottement le plus élevé est déterminée (3), en ce que le comportement de cette roue (roue-MPE) en rotation est surveillé (2) et est stabilisé (4) au moyen d'une intervention des freins dès que le glissement de traction de cette roue franchit vers le haut une valeur limite et en ce qu'après la mise en service de l'intervention des freins sur la roue (roue-MPE) possédant le coefficient de frottement le plus élevé, une action de commande de la pression de freinage dans le frein de roue de la seconde roue de cet essieu est empêchée et la pression de freinage qui existe dans le frein de roue de cette seconde roue (roue-MPF) est maintenue constante (6) ou est supprimée (10).

2. Procédé suivant la revendication 1, caractérisé en ce que la roue (roue-MPE) possédant le coefficient de frottement le plus élevé est déterminée au moyen d'une exploitation de valeurs de mesure et de critères qui traduisent le comportement des roues motrices en rotation, par exemple par la succession, dans le temps, du passage des deux roues d'un essieu moteur à l'état instable, par une comparaison du glissement de traction de ces deux roues ou analogue.

3. Agencement de circuit permettant la mise en oeuvre d'un procédé suivant l'une quelconque des revendications 1 et 2, comprenant un circuit permettant de déterminer la roue (roue-MPE) possédant momentanément le coefficient de frottement le plus élevé et un circuit permettant de surveiller cette roue (roue-MPE) et de commander la pression de freinage lorsque cette roue passe dans un état instable, caractérisé en ce qu'il est agencé sous la forme d'une adjonction à un agencement de circuit, permettant la régulation de propulsion par intervention des freins, qui est déjà utilisé lorsqu'une roue motrice passe dans un état instable, en ce qu'il entre en action dès que la vitesse du véhicule franchit vers le haut un seuil de vitesse préfixé ou dès que des critères préfixés indiquant un excès de sollicitation des freins de roue ou d'autres éléments constitutifs du véhicule sont remplis, en ce qu'il est en outre prévu des moyens qui, après la mise en service de l'intervention du frein sur la roue (roue-MPE) possédant le coefficient de frottement le plus élevé, empêchent une action de commande sur la pression de freinage dans le frein de la seconde roue (roue-MPF) de cet essieu et en ce que, dans ce cas, ces moyens maintiennent constante ou suppriment la pression de freinage existant dans le frein de cette seconde roue (roue-MPF).

4. Agencement de circuit suivant la revendication 3, caractérisé en ce que le seuil de vitesse est fixé à une valeur comprise entre 20 et 50 km/h.

5. Agencement de circuit suivant l'une quelconque des revendications 3 et 4, caractérisé en ce que la roue (roue-MPE) possédant le coefficient de frottement le plus élevé est déterminée au cours d'une régulation de propulsion au moyen d'une comparaison du niveau moyen de pression de freinage dans les freins des deux roues d'un essieu moteur.

6. Agencement de circuit suivant l'une quelconque des revendications 3 à 5, caractérisé en ce que, lors de la mise en service de la régulation "mode SK" dépendant du comportement en rotation de la roue (roue-MPE) possédant le coefficient de frottement le plus élevé, la régulation de propulsion est coupée.

7. Agencement de circuit suivant l'une quelconque des revendications 3 à 6, caractérisé en ce que la régulation (mode SK) dépendant de la roue (roue-MPE) qui possède le coefficient de frottement le plus élevé entre en action à la place de la régulation de propulsion dès que la température des freins ou une valeur approchée (modèle de température), obtenue par une mesure des phénomènes déterminant la température des freins, franchit vers le haut une valeur limite.
